# EUROPEAN PATENT APPLICATION

(11) **EP 4 482 107 A1**
(43) Date of publication of application: **25.12.2024**
(21) Application number: 23752472.3
(22) Date of filing: 14.02.2023
(51) Int. Cl.: H04L 43/0852

(54) **BEAM HANDOVER DELAY DETERMINATION METHOD AND APPARATUS, AND TERMINAL**

(30) Priority: 14.02.2022 CN 202210135647
(71) Applicant: VIVO MOBILE COMMUNICATION CO., LTD., Dongguan, Guangdong 523863 (CN)
(72) Inventor: WANG, Chenxi, Dongguan, Guangdong 523863 (CN); SUN, Yanliang, Dongguan, Guangdong 523863 (CN); SUN, Peng, Dongguan, Guangdong 523863 (CN)
(74) Representative: Lavoix
(86) International application number: PCT/CN2023/075892
(87) International publication number: WO 2023/151695

(57) **Abstract**

This application pertains to the field of communication technologies, and discloses a beam switching delay determining method and apparatus, and a terminal. The beam switching delay determining method in embodiments of this application includes: receiving, by a terminal, indication information, where the indication information is used to indicate target beams, the target beams include a first beam and a second beam, and the first beam and the second beam are associated with two different cells; and determining, by the terminal, a switching delay of the target beam according to a first preset rule in a case that the indication information is received.

## Description

### CROSS-REFERENCE TO RELATED APPLICATIONS

This application claims priority to Chinese Patent Application No. 202210135647.X, filed in China on February 14, 2022, which is incorporated herein by reference in its entirety.

### TECHNICAL FIELD

This application pertains to the field of communication technologies, and specifically relates to a beam switching delay determining method and apparatus, and a terminal.

### BACKGROUND

A terminal uses a target beam to send and receive data, but needs to measure a reference signal associated with the target beam before it can normally use the target beam to receive and/or send the data. In the prior art, in a case that a network-side device has activated a plurality of transmission configuration indicator (Transmission Configuration Indicator, TCI) states associated with different cells, a terminal cannot measure reference signals of a plurality of cells simultaneously. Therefore, there is currently no solution for the terminal to determine switching delays of a plurality of target beams associated with different cells, and reliability of data transmission of the terminal is affected.

### SUMMARY

Embodiments of this application provide a beam switching delay determining method and apparatus, and a terminal to resolve a problem that reliability of data transmission of a terminal is low in a case that a network-side device activates a plurality of TCI states associated with different cells.

According to a first aspect, a beam switching delay determining method is provided. The method includes:
receiving, by a terminal, indication information, where the indication information is used to indicate target beams, the target beams include a first beam and a second beam, and the first beam and the second beam are associated with two different cells; and
determining, by the terminal, a switching delay of the target beam according to a first preset rule in a case that the indication information is received.

According to a second aspect, a beam switching delay determining apparatus is provided. The apparatus includes:
a receiving module, configured to receive indication information, where the indication information is used to indicate target beams, the target beams include a first beam and a second beam, and the first beam and the second beam are associated with two different cells; and
a determining module, configured to determine a switching delay of the target beam according to a first preset rule in a case that the indication information is received.

According to a third aspect, a terminal is provided. The terminal includes a processor and a memory. The memory stores a program or instructions capable of running on the processor. When the program or instructions are executed by the processor, the steps of the method according to the first aspect are implemented.

According to a fourth aspect, a terminal is provided. The terminal includes a processor and a communication interface. The processor is configured to determine a switching delay of a target beam according to a first preset rule in a case that indication information is received. The communication interface is configured to receive the indication information, where the indication information is used to indicate target beams, the target beams include a first beam and a second beam, and the first beam and the second beam are associated with two different cells.

According to a fifth aspect, a communication system is provided and includes a terminal and a network-side device. The terminal may be configured to perform the steps of the method according to the first aspect.

According to a sixth aspect, a readable storage medium is provided. The readable storage medium stores a program or instructions. When the program or instructions are executed by a processor, the steps of the method according to the first aspect are implemented.

According to a seventh aspect, a chip is provided. The chip includes a processor and a communication interface. The communication interface is coupled to the processor. The processor is configured to run a program or instructions to implement the method according to the first aspect.

According to an eighth aspect, a computer program product is provided. The computer program product is stored in a storage medium. The computer program product is executed by at least one processor to implement the steps of the method according to the first aspect.

In the embodiments of this application, the terminal receives the indication information, where the indication information is used to indicate the target beams, the target beams include the first beam and the second beam, and the first beam and the second beam are associated with two different cells; and the terminal determines the switching delay of the target beam according to the first preset rule in the case that the indication information is received. In this way, in a case that the two beams are associated with different cells, the terminal can determine the switching delay of the target beam, thereby ensuring reliability of data transmission.

### BRIEF DESCRIPTION OF DRAWINGS

FIG. 1 is a block diagram of a wireless communication system to which an embodiment of this application may be applied;
FIG. 2 is a flowchart of a beam switching delay determining method according to an embodiment of this application;
FIG. 3a to FIG. 3h are schematic diagrams of a beam switching delay determining method according to an embodiment of this application;
FIG. 4 is a structural diagram of a beam switching delay determining apparatus according to an embodiment of this application;
FIG. 5 is a structural diagram of a communication device according to an embodiment of this application; and
FIG. 6 is a structural diagram of a terminal according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by a person of ordinary skill in the art based on the embodiments of this application shall fall within the protection scope of this application.

The terms "first", "second", and the like in this specification and claims of this application are used to distinguish between similar objects instead of describing a specific order or sequence. It should be understood that the terms used in this way are interchangeable in appropriate circumstances, so that the embodiments of this application can be implemented in other orders than the order illustrated or described herein. In addition, objects distinguished by "first" and "second" usually fall within one class, and a quantity of objects is not limited. For example, there may be one or more first objects. In addition, the term "and/or" in the specification and claims indicates at least one of connected objects, and the character "/" generally represents an "or" relationship between associated objects.

It should be noted that technologies described in the embodiments of this application are not limited to a long term evolution (Long Term Evolution, LTE)/LTE-Advanced (LTE-Advanced, LTE-A) system, and can also be used in other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are usually used interchangeably. The described technologies may be used for the foregoing systems and radio technologies, and may also be used for other systems and radio technologies. However, in the following descriptions, the new radio (New Radio, NR) system is described for an illustrative purpose, and NR terms are used in most of the following descriptions. These technologies may also be applied to other applications than an NR system application, for example, a 6th Generation (6^{th} Generation, 6G) communication system.

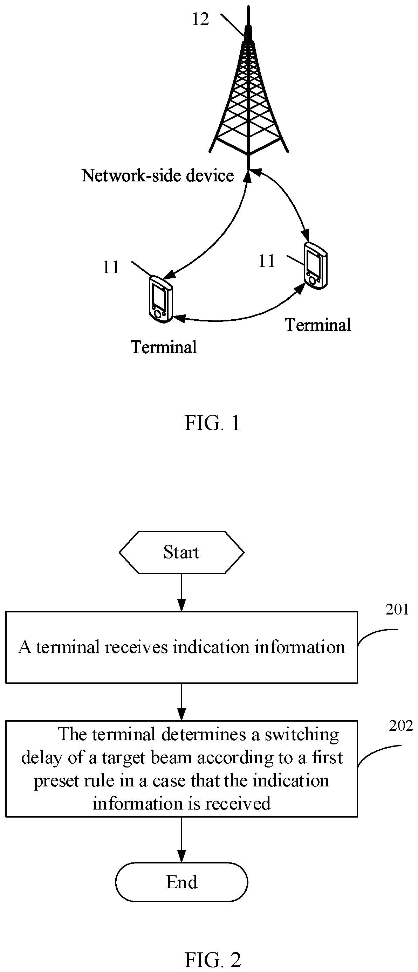

FIG. 1 is a block diagram of a wireless communication system to which an embodiment of this application may be applied. The wireless communication system includes a terminal 11 and a network-side device 12. The terminal 11 may be a terminal-side device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR) or virtual reality (virtual reality, VR) device, a robot, a wearable device (Wearable Device), vehicle user equipment (Vehicle User Equipment, VUE), pedestrian user equipment (Pedestrian User Equipment, PUE), a smart home (a home device having a wireless communication function, such as a refrigerator, a television, a washing machine, or furniture), a game console, a personal computer (personal computer, PC), a teller machine, or a self-service machine. The wearable device includes a smartwatch, a smart band, a smart headphone, smart glasses, smart jewelry (a smart bracelet, a smart wrist chain, a smart ring, a smart necklace, a smart anklet, a smart ankle chain, or the like), a smart wristband, smart clothing, or the like. It should be noted that a specific type of the terminal 11 is not limited in the embodiments of this application. The network-side device 12 may include an access network device or a core network device. The access network device may also be referred to as a radio access network device, a radio access network (Radio Access Network, RAN), a radio access network function, or a radio access network element. The access network device 12 may include a base station, a wireless local area network (Wireless Local Area Network, WLAN) access point, a Wireless Fidelity (Wireless Fidelity, Wi-Fi) node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmission reception point (Transmitting Receiving Point, TRP), or another appropriate term in the art. As long as the same technical effect is achieved, the base station is not limited to specific technical terms. It should be noted that in the embodiments of this application, only a base station in an NR system is used as an example for description, but a specific type of the base station is not limited.

A beam switching delay determining method provided in the embodiments of this application is hereinafter described in detail by using some embodiments and application scenarios thereof with reference to the accompanying drawings.

As shown in FIG. 2, an embodiment of this application provides a beam switching delay determining method, including the following steps.

Step 201: A terminal receives indication information, where the indication information is used to indicate target beams, the target beams include a first beam and a second beam, and the first beam and the second beam are associated with two different cells.

A cell may be identified by a physical cell identifier (Physical Cell Identifier, PCI) or an additional PCI index (AdditionPCIindex). The target beams may include other beams in addition to the first beam and the second beam. This is not limited herein.

In a case that the cell is identified by the PCI, the first beam is associated with the PCI may be one of the following:
the first beam is directly associated with the PCI; and
an indirect quasi co-location (Quasi co-location, QCL) source reference signal (Reference Signal, RS) (indirect QCL source RS) of the first beam is associated with the PCI.

In a case that the cell is identified by the AdditionPCIindex, a manner in which the first beam is associated with the AdditionPCIindex is consistent with a manner of identification by the PCI.

Step 202: The terminal determines a switching delay of the target beam according to a first preset rule in a case that the indication information is received.

Optionally, the first preset rule includes at least one of the following:
prolonging a layer 1 (Layer 1, L1) measurement time;
prolonging a time-frequency synchronization and automatic gain control (Automatic Gain Control, AGC) adjustment time; and
prolonging a path loss estimation time.

The terminal may determine a switching delay of a beam of the target beams according to the first preset rule, for example, determine the switching delay of the beam of the target beams by prolonging the L1 measurement time; or determine the switching delay of the beam of the target beams by prolonging the time-frequency synchronization and AGC adjustment time; or determine the switching delay of the beam of the target beams by prolonging the path loss estimation time.

In this embodiment, the terminal receives the indication information, where the indication information is used to indicate the target beams, the target beams include the first beam and the second beam, and the first beam and the second beam are associated with two different cells; and the terminal determines the switching delay of the target beam according to the first preset rule in the case that the indication information is received. In this way, in a case that the two beams are associated with different cells, the terminal can determine the switching delay of the target beam, thereby ensuring reliability of data transmission.

In an embodiment of this application, the prolonging an L1 measurement time includes:
(1) prolonging, based on a first preset value, an L1 measurement time corresponding to the first beam, where the first preset value is determined based on at least one of the following:
   a period of a first RS;
   a priority of the first RS; and
   a priority of a cell associated with the first RS, where
   the first preset value may be preset, for example, the first preset value may be a first sharing factor; and
(2) prolonging, based on a second preset value, an L1 measurement time corresponding to the second beam, where the second preset value is determined based on at least one of the following:
   the period of the first RS;
   the priority of the first RS; and
   the priority of the cell associated with the first RS, where
   the second preset value may be preset, for example, the second preset value may be a second sharing factor.

The prolonging a path loss estimation time includes:
(1) prolonging, based on a third preset value, a path loss estimation time corresponding to the first beam, where the third preset value is determined based on at least one of the following:
   the period of the first RS;
   the priority of the first RS; and
   the priority of a cell associated with the first RS, where
   the third preset value may be preset, for example, the third preset value may be a third sharing factor; and
(2) prolonging, based on a fourth preset value, a path loss estimation time corresponding to the second beam, where the fourth preset value is determined based on at least one of the following:
   the period of the first RS;
   the priority of the first RS; and
   the priority of a cell associated with the first RS, where
   the fourth preset value may be preset, for example, the fourth preset value may be a fourth sharing factor.

The first preset value, the second preset value, the third preset value, and the fourth preset value may be the same or may be different.

In an embodiment of this application, the switching delay of the target beam includes at least one of the following:
(1) a receiving and processing delay of the indication information;
(2) a hybrid automatic repeat request (Hybrid Automatic Repeat Request, HARQ) delay;
(3) an L1 measurement time;
(4) a time-frequency synchronization and AGC adjustment time, where for example, the time-frequency synchronization and AGC adjustment time includes an arrival time of a first RS and a processing time of the first RS, where the first RS is a QCL-Type A source reference signal (QCL-Type A source RS) or a QCL-Type C source reference signal (QCL-Type C source RS) in the target beam; and
(5) a path loss estimation time, where for example, the path loss estimation time includes an arrival time of a first path loss reference signal (Path Loss Reference Signal, PL-RS) and a measurement estimation time, and the measurement estimation time is a time required for the terminal to measure n PL-RS samples and perform smooth filtering to obtain a path loss, and may be directly understood as n times a period of a PL-RS, where n is a positive integer.

In an embodiment of this application, in a case that at least two of an RS associated with the first beam, an RS associated with the second beam, and a second RS overlap in time domain, the first RS includes at least one of the RS associated with the first beam, the RS associated with the second beam, and the second RS among the RSs that overlap in time domain.

For example, if the RS associated with the first beam and the RS associated with the second beam overlap in time domain, the first RS includes the RS associated with the first beam and/or the RS associated with the second beam; if the RS associated with the first beam and the second RS overlap in time domain, the first RS includes the RS associated with the first beam and/or the second RS; if the RS associated with the second beam and the second RS overlap in time domain, the first RS includes the RS associated with the second beam and/or the second RS; or if the RS associated with the first beam, the RS associated with the second beam, and the second RS overlap in time domain, the first RS includes at least one of the RS associated with the first beam, the RS associated with the second beam, and the second RS.

Optionally, the second RS is a beam failure detection reference signal (Beam Failure Detection Reference Signal, BFD-RS), a candidate beam detection reference signal (Candidate Beam Detection Reference Signal, CBD-RS), a radio link monitoring reference signal (Radio Link Monitor Reference Signal, RLM-RS), or an RS used for L1 measurement.

Optionally, a cell associated with the second RS includes one of the following:
a current serving cell;
a cell associated with one of the target beams; and
other cells, where the other cells are cells other than the current serving cell and a cell associated with each of the target beams.

In an embodiment of this application, the prolonging a time-frequency synchronization and AGC adjustment time includes prolonging an arrival time of a first RS received after the indication information is received by the terminal, where the prolonging an arrival time of a first RS is prolonging the arrival time of the first RS by U times.

For example, if the arrival time of the first RS received after the indication information is received by the terminal is t, a time obtained by prolonging the arrival time of the first RS is t×U, where U may be 1, 2, 3, and so on, and a maximum value of U is K.

Optionally, in a case that at least two of an RS associated with the first beam, an RS associated with the second beam, and a second RS overlap in time domain, a value of K is a quantity of the RSs overlapping in time domain, and U is a positive integer less than or equal to K.

For example, if the RS associated with the first beam and the RS associated with the second beam overlap in time domain, the value of K is a quantity of the RSs that overlap in time domain between the RS associated with the first beam and the RS associated with the second beam. For example, if the first beam is associated with a first QCL source RS and a PL-RS, where the first QCL source RS and the PL-RS are a same RS, and the second beam is associated with a second QCL source RS, and the first QCL source RS, the PL-RS, and the second QCL source RS overlap in time domain, a quantity of the RSs that overlap in time domain is 2. If the RS associated with the first beam and the second RS overlap in time domain, the value of K is a quantity of the RSs that overlap in time domain between the RS associated with the first beam and the second RS. If the RS associated with the second beam and the second RS overlap in time domain, the value of K is a quantity of the RSs that overlap in time domain between the RS associated with the second beam and the second RS. If the RS associated with the first beam, the RS associated with the second beam, and the second RS overlap in time domain, the value of K is a quantity of the RSs that overlap in time domain among the RS associated with the first beam, the RS associated with the second beam, and the second RS.

In an embodiment of this application, the first beam and the second beam meet at least one of the following:
(1) the first beam or the second beam is associated with a current serving cell, for example, the first beam is associated with the current serving cell, and the second beam is associated with a neighboring cell of the current serving cell, or the second beam is associated with the current serving cell, and the first beam is associated with a neighboring cell of the current serving cell;
(2) an RS associated with the first beam and an RS associated with the second beam overlap in time domain;
(3) the RS associated with the first beam and a second RS overlap in time domain; and
(4) the RS associated with the second beam and the second RS overlap in time domain.

In an embodiment of this application, the RS associated with the first beam includes at least one of the following:
a direct or indirect quasi co-location QCL source RS of the first beam; and
a PL-RS associated with the first beam; or
the RS associated with the second beam includes at least one of the following:
   a direct or indirect QCL source RS of the second beam; and
   a PL-RS associated with the second beam.

In an embodiment of this application, the indication information is carried in one or more pieces of beam switching signaling. The beam switching signaling may be radio resource control (Radio Resource Control, RRC), a media access control control element (Media Access Control Control Element, MAC CE), downlink control information (Downlink Control Information, DCI), or the like.

The indication information includes at least one of the following:
a spatial relation (Spatial relation) identifier; and
a TCI state (state) identifier, where the TCI state identifier may be a joint TCI (Joint TCI), a downlink (Down Link, DL) TCI state, an uplink (Up Link, UL) TCI state, or a TCI state in the related art.

In an embodiment of this application, the terminal determines a switching delay of the target beam according to a first preset rule in a case that the indication information is received includes:
the terminal determines the switching delay of the target beam based on a first switching delay according to the first preset rule in the case that the indication information is received, where the first switching delay is determined based on a protocol agreement.

In this embodiment of this application, the RS, the QCL source RS, and the PL-RS may be synchronization signal blocks (Synchronization Signal Block, SSB), channel state information reference signals (Channel State Information Reference Signal, CSI-RS), or sounding reference signals (Sounding Reference Signal, SRS).

The beam switching delay determining method provided in this application is hereinafter described by using examples.

In an implementation, the network-side device indicates cases of a plurality of DL TCI states associated with different PCIs.

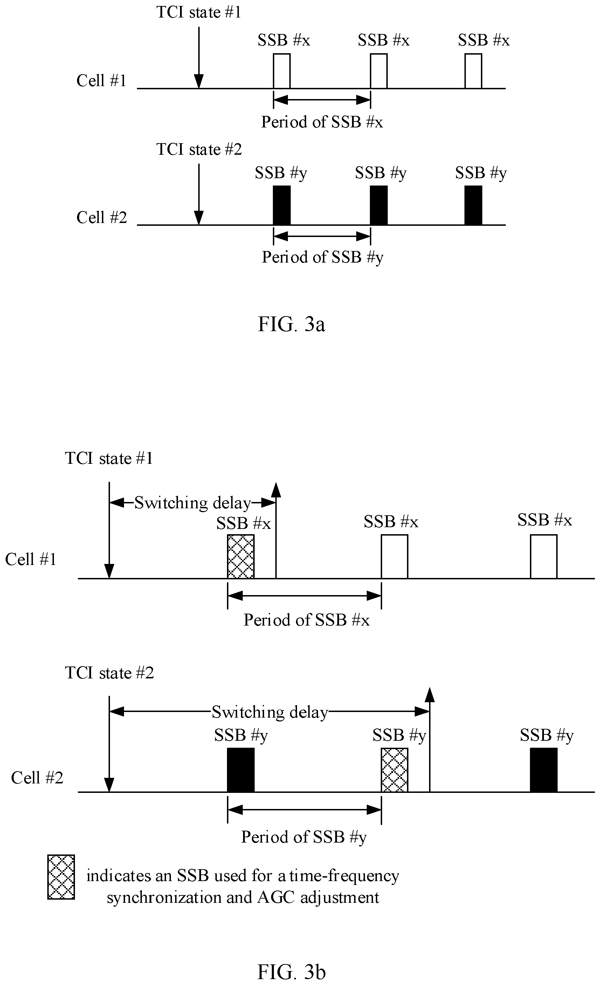

Case 1: The network-side device simultaneously indicates DL TCI state #1 associated with PCI #1 and DL TCI state #2 associated with PCI #2, and an RS associated with DL TCI state #1 and an RS associated with DL TCI state #2 overlap in time domain. As shown in FIG. 3a, periods of SSB #x and SSB #y are the same, that is, the two reference signals completely overlap in time domain.

Case 1-1: As shown in FIG. 3b, both DL TCI state #1 and DL TCI state #2 are known (known), that is, the terminal has measured corresponding beams.

Because L1 measurement is not required, only relaxation of a time-frequency synchronization and AGC adjustment time, that is, relaxation of a time requirement of a first SSB, needs to be considered for the beam switching delay on a basis of a conventional switching delay. Specifically, as shown in FIG. 3b, assuming that cell #1 has a high priority, the terminal first completes a time-frequency synchronization and AGC adjustment of DL TCI state #1 based on SSB #x, and then completes a time-frequency synchronization and AGC adjustment of DL TCI state #2 based on a second SSB #y. Therefore, the time-frequency synchronization and AGC adjustment time of DL TCI state #2 should be relaxed to the second SSB or 2*first SSB (that is, twice the time-frequency synchronization and AGC adjustment time determined based on the first SSB #x), while the time-frequency synchronization and AGC adjustment time of DL TCI state #1 remains unchanged and is still the first SSB, where the first SSB is the time-frequency synchronization and AGC adjustment time determined based on the first SSB #X.

Case 1-2: DL TCI state #1 is known and DL TCI state #2 is unknown (unknown).

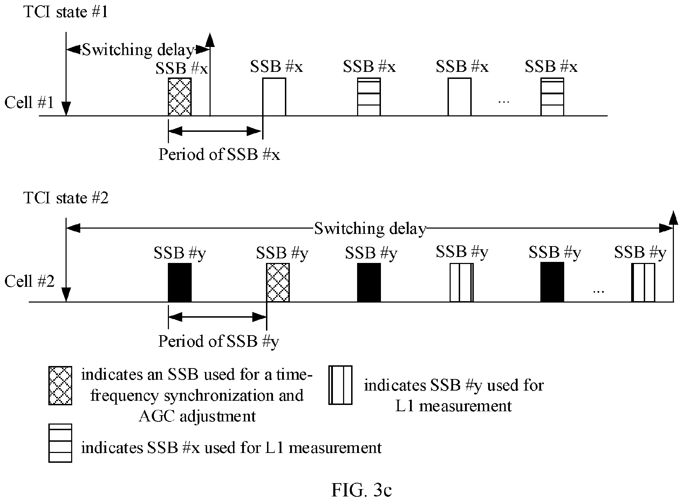

The L1 measurement time does not need to be considered for a switching delay of DL TCI state #1, but the L1 measurement time needs to be considered for a switching delay of DL TCI state #2. Specifically, as shown in FIG. 3c, assuming that cell #1 (cell #1) has a high priority, after the terminal completes a time-frequency synchronization and AGC adjustment of DL TCI state #1 based on SSB #x, DL TCI state #1 takes effect.

However, DL TCI state #2 can take effect only after a time-frequency synchronization and AGC adjustment is performed on the second SSB #y and L1 measurement is performed on L1-RSRP to find a suitable receive beam (Rx beam). Considering that SSB #x and SSB #y are both used for L1 measurement and overlap in time domain, it is necessary to stagger the measurement and relax the measurement time requirement. As shown in FIG. 3c, assuming that SSB #x and SSB #y are separately measured at equal 1: 1 measurement time intervals, the L1 measurement time of SSB #x and SSB #y should be relaxed based on a sharing factor (sharing factor) of 2. Therefore, DL TCI state #2 can take effect only after the L1 measurement time requirement is met.

Case 1-3: Both DL TCI state #1 and DL TCI state #2 are unknown.

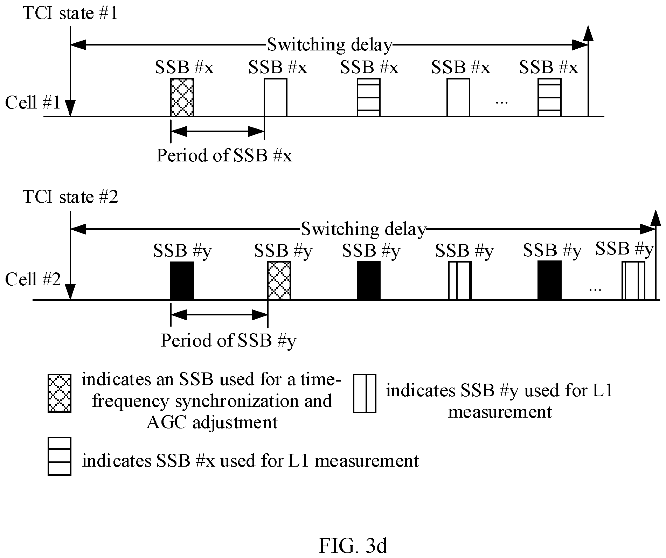

As shown in FIG. 3d, the time-frequency synchronization and AGC adjustment time and the L1 measurement time need to be considered for both a switching delay of DL TCI state #1 and a switching delay of DL TCI state #2. In comparison with case 1-2, a difference lies in that DL TCI state #1 not only meets a time-frequency synchronization and AGC adjustment time requirement, but also needs to meet an L1 measurement requirement.

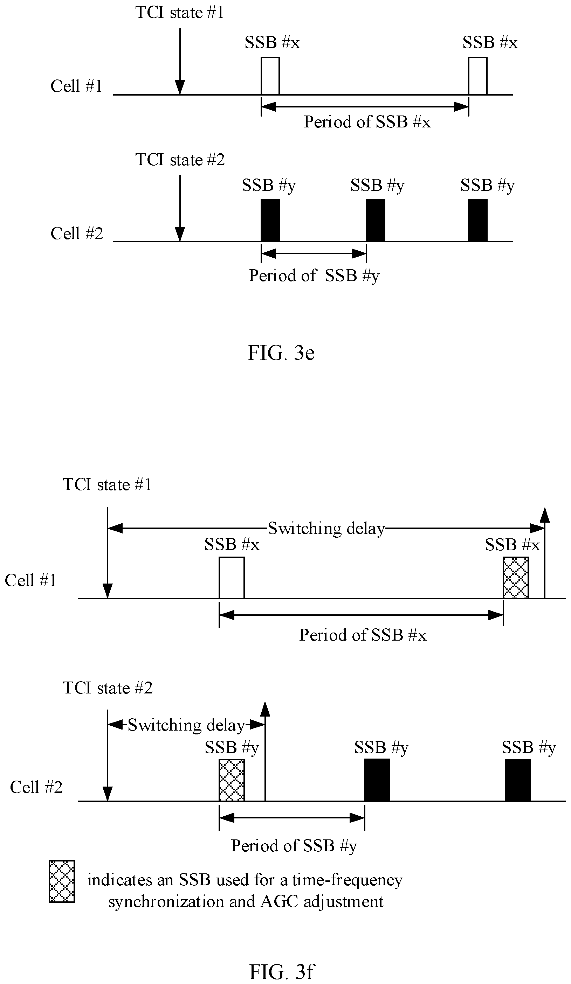

Case 2: As shown in FIG. 3e, SSB #x and SSB #y have different periods, that is, two reference signals partially overlap in time domain.

Case 2-1: Both DL TCI state #1 and DL TCI state #2 are known, that is, the terminal has measured corresponding beams.

Assuming that cell #1 has a high priority or that SSB #x has a high priority, that is, the longer an RS period is, the higher the priority is, the terminal preferentially performs a time-frequency synchronization and AGC adjustment of DL TCI state #1 based on SSB #x, and then completes a time-frequency synchronization and AGC adjustment of DL TCI state #2 based on the second SSB #y. In this case, switching delays of DL TCI state #1 and DL TCI state #2 are the same as those in case 1-1.

Assuming that cell #2 (cell #2) has a high priority, the terminal preferentially performs the time-frequency synchronization and AGC adjustment of DL TCI state #2 based on SSB #y, and then completes the time-frequency synchronization and AGC adjustment of DL TCI state #1 based on the second SSB #x. The switching delays of the two beams are shown in FIG. 3f.

Case 2-2: DL TCI state #1 is known and DL TCI state #2 is unknown.

A difference between case 2-2 and case 1-2 lies in the value of the sharing factor. Because periods of SSB #x and SSB #y are different, some SSBs #y overlap with SSB #x. In this case, the sharing factor of the L1 measurement time may be determined based on the periods of SSB #x and SSB #y.

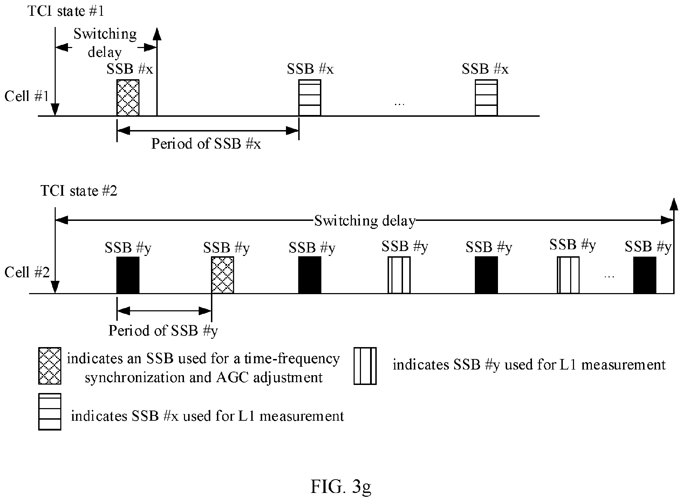

As shown in FIG. 3g, an RS with a long period is preferentially measured, that is, as long as SSB #y and SSB #x overlap, the terminal measures only SSB #x. In this case, because L1 measurement is performed on every SSB #x, the L1 measurement time requirement of SSB #x does not need to be relaxed. However, because some SSBs #y overlap with SSB #x, and L1 measurement is not performed, the L1 measurement time of SSB #y needs to be relaxed based on: Sharing factor = 1/(1 - Period of SSB #y/Period of SSB #x), where "/" represents a division sign.

Case 2-3: Both DL TCI state #1 and DL TCI state #2 are unknown.

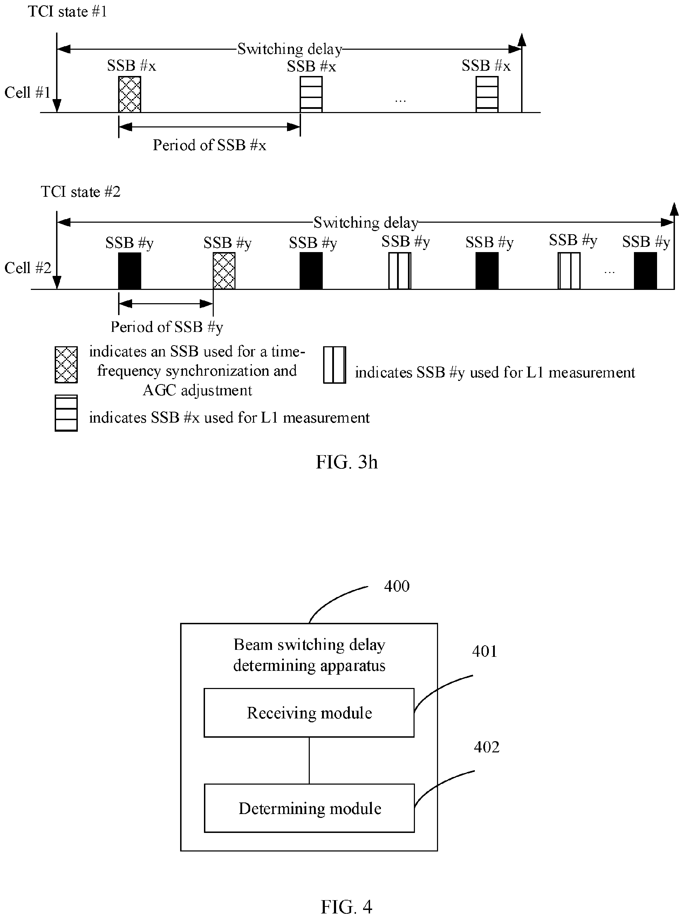

A difference between case 2-3 and case 2-2 lies in that the L1 measurement time of SSB #x also needs to be considered for DL TCI state #1, but as mentioned in case 2-2, the L1 measurement requirement of SSB #x does not need to be relaxed. A specific switching delay is shown in FIG. 3h.

In another implementation, the network-side device indicates cases of a plurality of UL TCI states associated with different PCIs.

The network-side device indicates UL TCI state #1 associated with PCI #1 and UL TCI state #2 associated with PCI #2, an RS associated with UL TCI state #1 and an RS associated with UL TCI state #2 overlap in time domain, and the terminal does not maintain (maintain) PL-RSs associated with UL TCI state #1 and UL TCI state #2; a QCL source RS (RS #1) directly or indirectly associated with UL TCI state #1 and a PL-RS (RS #2) associated with UL TCI state #1 may be the same or different; and a QCL source RS (RS #3) directly or indirectly associated with UL TCI state #2 and a PL-RS (RS #4) associated with UL TCI state #2 may be the same or different.

Case 3: The RS associated with UL TCI state #1 and the RS associated with UL TCI state #2 have a same period, that is, they completely overlap in time domain.

Case 3-1: Both UL TCI state #1 and UL TCI state #2 are known.

Because L1 measurement is not required, only relaxation of a path loss estimation time, that is, relaxation of sampling estimation time requirements of a first PL-RS and a subsequent PL-RS, needs to be considered for the beam switching delay on a basis of a conventional switching delay. The following two specific forms of relaxation are included:
Based on a priority of a PL-RS or a priority of a cell, the terminal first completes path loss estimation of UL TCI state #1 based on the PL-RS associated with UL TCI state #1 and subsequent N-1 PL-RS samples, and then completes path loss estimation of UL TCI state #2 based on the PL-RS associated with UL TCI state #2 and subsequent N-1 samples. In this case, only a path loss estimation time corresponding to TCI state #2 needs to be relaxed based on a sharing factor equal to 2.

The terminal staggers measurement and sequentially measures the PL-RS associated with UL TCI state #1 and the PL-RS associated with UL TCI state #2 to estimate a path loss. In this case, the path loss estimation time corresponding to TCI state #1 and TCI state #2 needs to be relaxed based on the sharing factor equal to 2, similarly to case 1-2.

Case 3-2: UL TCI state #1 is known and UL TCI state #2 is unknown.

In comparison with case 3-1, the L1 measurement time further needs to be considered for a switching delay of UL TCI state #2. Specific switching delay requirements are shown in the following Table 1.

**Table 1**

| | | |
|---|---|---|
| RS #3 and RS #4 are the same | RS #3 and RS #2 overlap | The path loss estimation time corresponding to UL TCI state #1, and the L1 measurement time and path loss estimation time corresponding to UL TCI state #2 need to be prolonged based on the sharing factor (such as 2). |
| RS #3 and RS #4 are different | RS #3 and RS #2 overlap | The path loss estimation time corresponding to UL TCI state #1, and the L1 measurement time corresponding to UL TCI state #2 need to be prolonged based on the sharing factor (such as 2). |
| | RS #4 and RS #2 overlap | The path loss estimation time corresponding to UL TCI state #1 and the path loss estimation time corresponding to UL TCI state #2 need to be prolonged based on the sharing factor (refer to case 3-1 for details). |

Case 3-3: UL TCI state #1 is unknown and UL TCI state #2 is unknown.

In comparison with case 3-1, the L1 measurement time further needs to be considered for switching delays of UL TCI state #1 and UL TCI state #2. Specific switching delay requirements are shown in the following Table 2.

**Table 2**

| | | | | |
|---|---|---|---|---|
| RS #1 and RS #2 are the same | RS #3 and RS #4 are the same | RS #1 and RS #3 overlap | | Case 3-3-1: The L1 measurement time and path loss estimation time corresponding to UL TCI state #1 and the L1 measurement time and path loss estimation time corresponding to UL TCI state #2 need to be prolonged based on the sharing factor (such as 2). |
| | RS #3 and RS #4 are different | RS #1 and RS #3 overlap | | Case 3-3-2: The L1 measurement time and path loss estimation time corresponding to UL TCI state #1 and the L1 measurement time corresponding to UL TCI state #2 need to be prolonged based on the sharing factor (such as 2). |
| | | RS #1 and RS #4 overlap | | Case 3-3-3: The L1 measurement time and path loss estimation time corresponding to UL TCI state #1 and the path loss estimation time corresponding to UL TCI state #2 need to be prolonged based on the sharing factor (refer to case 3-1 for details). |
| RS #1 and RS #2 are different | RS #3 and RS #4 are the same | RS #1 and RS #3 overlap | | Case 3-3-4: The L1 measurement time corresponding to UL TCI state #1 and the L1 measurement time and path loss estimation time corresponding to UL TCI state #2 need to be prolonged based on the sharing factor (such as 2). |
| | | RS #2 and RS #3 overlap | | Case 3-3-5: The path loss estimation time corresponding to UL TCI state #1 and the L1 measurement time and path loss estimation time corresponding to UL TCI state #2 need to be prolonged based on the sharing factor (such as 2). |
| | RS #3 and RS #4 are different | RS #1 and RS #3 overlap | RS #2 and RS #4 overlap | Same as case 3-3-1. |
| | | | RS #2 and RS #4 do not overlap | Case 3-3-6: The L1 measurement time corresponding to UL TCI state #1 and the L1 measurement time corresponding to UL TCI state #2 need to be prolonged based on the sharing factor (such as 2). |
| | | RS #1 and RS #4 overlap | RS #2 and RS #3 overlap | Same as case 3-3-1. |
| | | | RS #2 and RS #3 do not overlap | Case 3-3-7: The L1 measurement time corresponding to UL TCI state #1 and the path loss estimation time corresponding to UL TCI state #2 need to be prolonged based on the sharing factor (such as 2). |
| | | RS #2 and RS #3 overlap | RS #1 and RS #4 overlap | Same as case 3-3-1. |
| | | | RS #1 and RS #4 do not overlap | Case 3-3-8: The path loss estimation time corresponding to UL TCI state #1 and the L1 measurement time corresponding to UL TCI state #2 need to be prolonged based on the sharing factor (such as 2). |
| | | RS #2 and RS #4 overlap | RS #1 and RS #3 overlap | Same as case 3-3-1. |
| | | | RS #1 and RS #3 do not overlap | Case 3-3-9: The L1 measurement time corresponding to UL TCI state #1 and the path loss estimation time corresponding to UL TCI state #2 need to be prolonged based on the sharing factor (such as 2). |

Case 4: The RS associated with UL TCI state #1 and the RS associated with UL TCI state #2 have different periods, that is, they partially overlap in time domain.

Case 4-1: Both UL TCI state #1 and UL TCI state #2 are known.

Because L1 measurement is not required, only relaxation of a path loss estimation time, that is, relaxation of sampling estimation time requirements of a first PL-RS and a subsequent PL-RS, needs to be considered for the beam switching delay on a basis of a conventional switching delay. Because periods of RS #2 and RS #4 are different, some RSs #2 overlap with RS #4. In this case, the sharing factor of the path loss estimation time may be determined based on the periods of RS #2 and RS #4 (assuming that the period of RS #2 is longer than that of RS #4). For example, the terminal preferentially measures an RS with a long period. In other words, as long as RS #2 and RS #4 overlap, the terminal measures only RS #2. In this case, because the terminal performs path loss estimation based on first n RSs #2, a time requirement of the path loss estimation based on RS #2 does not need to be relaxed, that is, the sharing factor is equal to 1. However, because some RSs #4 overlap with RS #2, the path loss estimation is not performed, and the path loss estimation based on RS #4 needs to be relaxed based on: Sharing factor = 1/(1 - Period of RS #4/Period of RS #2).

Case 4-2: UL TCI state #1 is known and UL TCI state #2 is unknown.

In comparison with case 4-1, the L1 measurement time further needs to be considered for a switching delay of UL TCI state #2 in case 4-2. Specific switching delay requirements are shown in the following Table 3. For values of sharing factor #1 and sharing factor #2 in the table, refer to case 4-1.

**Table 3**

| | | |
|---|---|---|
| RS #3 and RS #4 are the same | RS #3 and RS #2 partially overlap | The path loss estimation time corresponding to UL TCI state #1 is prolonged based on sharing factor #1; and the L1 measurement time and path loss estimation time corresponding to UL TCI state #2 need to be prolonged based on sharing factor #2. |
| RS #3 and RS #4 are different | RS #3 and RS #2 partially overlap | The path loss estimation time corresponding to UL TCI state #1 is prolonged based on sharing factor #1; and the L1 measurement time corresponding to UL TCI state #2 needs to be prolonged based on sharing factor #2. |
| | RS #4 and RS #2 partially overlap | The path loss estimation time corresponding to UL TCI state #1 is prolonged based on sharing factor #1; and the path loss estimation time corresponding to UL TCI state #2 needs to be prolonged based on sharing factor #2. |

Case 4-3: Both UL TCI state #1 and UL TCI state #2 are unknown.

In comparison with case 3-1, the L1 measurement time further needs to be considered for switching delays of UL TCI state #1 and UL TCI state #2. Specific switching delay requirements are shown in the following Table 4. For values of sharing factor #1 and sharing factor #2 in Table 4, refer to case 4-1.

**Table 4**

| | | | | |
|---|---|---|---|---|
| RS #1 and RS #2 are the same | RS #3 and RS #4 are the same | RS #1 and RS #3 partially overlap | | Case 4-3-1: The L1 measurement time and path loss estimation time corresponding to UL TCI state #1 are prolonged based on sharing factor #1; and the L1 measurement time and path loss estimation time corresponding to UL TCI state #2 need to be prolonged based on sharing factor #2. |
| | RS #3 and RS #4 are different | RS #1 and RS #3 partially overlap | | Case 4-3-2: The L1 measurement time and path loss estimation time corresponding to UL TCI state #1 are prolonged based on sharing factor #1; and the L1 measurement time corresponding to UL TCI state #2 needs to be prolonged based on sharing factor #2. |
| | | RS #1 and RS #4 partially overlap | | Case 4-3-3: The L1 measurement time and path loss estimation time corresponding to UL TCI state #1 are prolonged based on sharing factor #1; and the path loss estimation time corresponding to UL TCI state #2 needs to be prolonged based on sharing factor #2. |
| RS #1 and RS #2 are different | RS #3 and RS #4 are the same | RS #1 and RS #3 partially overlap | | Case 4-3-4: The L1 measurement time corresponding to UL TCI state #1 is prolonged based on sharing factor #1; and the L1 measurement time and path loss estimation time corresponding to UL TCI state #2 need to be prolonged based on sharing factor #2. |
| | | RS #2 and RS #3 partially overlap | | Case 4-3-5: The path loss estimation time corresponding to UL TCI state #1 is prolonged based on sharing factor #1; and the L1 measurement time and path loss estimation time corresponding to UL TCI state #2 need to be prolonged based on sharing factor #2. |
| | RS #3 and RS #4 are different | RS #1 and RS #3 partially overlap | RS #2 and RS #4 partially overlap | Same as case 3-3-1. |
| | | | RS #2 and RS #4 do not overlap | Case 4-3-6: The L1 measurement time corresponding to UL TCI state #1 is prolonged based on sharing factor #1; and the L1 measurement time corresponding to UL TCI state #2 needs to be prolonged based on sharing factor #2. |
| | | RS #1 and RS #4 partially overlap | RS #2 and RS #3 partially overlap | Same as case 3-3-1. |
| | | | RS #2 and RS #3 do not overlap | Case 4-3-7: The L1 measurement time corresponding to UL TCI state #1 is prolonged based on sharing factor #1; and the path loss estimation time corresponding to UL TCI state #2 needs to be prolonged based on sharing factor #2. |
| | | RS #2 and RS #3 partially overlap | RS #1 and RS #4 partially overlap | Same as case 3-3-1. |
| | | | RS #1 and RS #4 do not overlap | Case 4-3-8: The path loss estimation time corresponding to UL TCI state #1 is prolonged based on sharing factor #1; and the L1 measurement time corresponding to UL TCI state #2 needs to be prolonged based on sharing factor #2. |
| | | RS #2 and RS #4 partially overlap | RS #1 and RS #3 partially overlap | Same as case 3-3-1. |
| | | | RS #1 and RS #3 do not overlap | Case 4-3-9: The L1 measurement time corresponding to UL TCI state #1 is prolonged based on sharing factor #1; and the path loss estimation time corresponding to UL TCI state #2 needs to be prolonged based on sharing factor #2. |

In still another implementation, the network-side device indicates a DL TCI state and a UL TCI state associated with different PCIs.

The network-side device simultaneously indicates DL TCI state #1 associated with PCI #1 and UL TCI state #2 associated with PCI #2, an RS (RS #1) associated with DL TCI state #1 and an RS associated with UL TCI state #2 overlap in time domain, and the terminal does not maintain a PL-RS associated with UL TCI state # 2; and a QCL source RS (RS #2) directly or indirectly associated with UL TCI state #2 and a PL-RS (RS #3) associated with UL TCI state #2 may be the same or different.

Case 5: The RS associated with UL TCI state #1 and the RS associated with UL TCI state #2 have a same period, that is, they completely overlap in time domain.

Case 5-1: Both DL TCI state #1 and UL TCI state #2 are known.
(1) The terminal maintains the PL-RS associated with UL TCI state #2.
   Switching delay requirements of DL TCI state #1 and UL TCI state #2 do not need to be relaxed.
(2) The terminal does not maintain the PL-RS associated with UL TCI state #2, and RS #1 and RS #3 overlap.

(21) A time-frequency synchronization and AGC adjustment time based on RS #1, that is, a time of waiting for a first RS #1, is prolonged:
prolonged to a time of waiting for an (N+1)^{th} RS #1, but the path loss estimation time of UL TCI state #2 is not prolonged; or
prolonged to a time of waiting for a second RS #1, but (N-1) sampling times based on RS #3 in the path loss estimation time of UL TCI state #2 are prolonged to N sampling times based on RS #3.

(22) In the path loss estimation time of UL TCI state #2, a time of waiting for a first RS #3 is prolonged to a time of waiting for a second RS #3, or to twice the time of waiting for the first RS #3; and a switching delay of UL TCI state #2 does not need to be relaxed.

Case 5-2: DL TCI state #1 is known and UL TCI state #2 is unknown.

Case 5-2-1: The terminal maintains the PL-RS associated with UL TCI state #2, and RS #1 and RS #2 overlap.

Because RS #1 and RS #2 overlap, the time-frequency synchronization and AGC adjustment time of DL TCI state #1 and the L1 measurement time corresponding to UL TCI state #2 need to be relaxed and adjusted specifically as follows:
The time-frequency synchronization and AGC adjustment time of DL TCI state #1 is not prolonged, and the L1 measurement time corresponding to UL TCI state #2 is prolonged by a time of waiting for a first RS #2.

The L1 measurement time corresponding to UL TCI state #2 is not prolonged, and the time-frequency synchronization and AGC adjustment time of DL TCI state #1 is prolonged by the L1 measurement time based on RS #1.

The terminal does not maintain the PL-RS associated with UL TCI state #2, as shown in Table 5.

**Table 5**

| | | |
|---|---|---|
| RS #2 and RS #3 are the same | RS #1 and RS #2 overlap | Case 5-2-2: A switching delay requirement corresponding to DL TCI state #1 does not need to be relaxed. In the path loss estimation time corresponding to UL TCI state #2, the time of waiting for the first RS #3 is prolonged to the time of waiting for the second RS #3, or to twice the time of waiting for the first RS #3. |
| RS #2 and RS #3 are different | RS #1 and RS #2 overlap | Same as case 5-2-1. |
| | RS #1 and RS #3 overlap | Same as case 5-1. |

Case 5-3: Both DL TCI state #1 and UL TCI state #2 are unknown.

Case 5-3-1: The terminal maintains the PL-RS associated with UL TCI state #2, and RS #1 and RS #2 overlap.

Because RS #1 and RS #2 overlap, the time-frequency synchronization and AGC adjustment time and L1 measurement time of DL TCI state #1 and the L1 measurement time corresponding to UL TCI state #2 need to be relaxed and adjusted specifically as follows:
The time-frequency synchronization and AGC adjustment time of DL TCI state #1 does not need to be relaxed. The L1 measurement time of DL TCI state #1 and the L1 measurement time of UL TCI state #2 need to be relaxed based on the sharing factor. In addition, optionally, the switching delay of UL TCI state #2 further needs to be prolonged by the time of waiting for the first RS #2 or by a period of one RS #2.

The terminal does not maintain the PL-RS associated with UL TCI state #2.

A switching delay requirement of DL TCI state #1 considers at least relaxation of the time-frequency synchronization and AGC adjustment time and the L1 measurement time; and a switching delay requirement of UL TCI state #2 considers at least relaxation of the path loss estimation time and the L1 measurement time. Specific cases are shown in the following Table 6.

**Table 6**

| | | |
|---|---|---|
| RS #2 and RS #3 are the same | RS #1 and RS #2 overlap | Case 5-3-2: The time-frequency synchronization and AGC adjustment time corresponding to DL TCI state #1 needs to be prolonged to M times the time of waiting for the first RS (M is optionally 1 or 2); and the L1 measurement time corresponding to DL TCI state #1 and the path loss estimation time and L1 measurement time corresponding to UL TCI state #2 should be prolonged based on the sharing factor (such as 2). |
| RS #2 and RS #3 are different | RS #1 and RS #2 overlap | Same as case 5-3-1. |
| | RS #1 and RS #3 overlap | Case 5-3-3: The time-frequency synchronization and AGC adjustment time corresponding to DL TCI state #1 needs to be prolonged to M times the time of waiting for the first RS (M is optionally 1 or 2); and the L1 measurement time corresponding to DL TCI state #1 and the path loss estimation time corresponding to UL TCI state #2 should be prolonged based on the sharing factor (such as 2). |

Case 6: The RS associated with UL TCI state #1 and the RS associated with UL TCI state #2 have different periods, that is, they partially overlap in time domain.

Case 6-1: Both DL TCI state #1 and UL TCI state #2 are known.
(1) The terminal maintains the PL-RS associated with UL TCI state #2.
   Switching delay requirements of DL TCI state #1 and UL TCI state #2 do not need to be relaxed.
(2) The terminal does not maintain the PL-RS associated with UL TCI state #2, and RS #1 and RS #3 partially overlap.

(21) A time-frequency synchronization and AGC adjustment time based on RS #1, that is, a time of waiting for a first RS #1, is prolonged:
for example, prolonged to a time of waiting for a second RS #1, or to twice the time of waiting for the first RS #1, but (N-1) sampling times based on RS #3 in the path loss estimation time of UL TCI state #2 are prolonged to N sampling times based on RS #3.

(22) In the path loss estimation time of UL TCI state #2, a time of waiting for a first RS #3 is prolonged to a time of waiting for a second RS #3, or to twice the time of waiting for the first RS #3; and a switching delay of UL TCI state #2 does not need to be relaxed.

Case 6-2: DL TCI state #1 is known and UL TCI state #2 is unknown.

Case 6-2-1: The terminal maintains the PL-RS associated with UL TCI state #2, and RS #1 and RS #2 overlap.

This case is the same as case 5-2-1.

The terminal does not maintain the PL-RS associated with UL TCI state #2, as shown in Table 7.

**Table 7**

| | | |
|---|---|---|
| RS #2 and RS #3 are the same | RS #1 and RS #2 overlap | Case 6-2-2: A switching delay requirement corresponding to DL TCI state #1 does not need to be relaxed. In the path loss estimation time of UL TCI state #2, the time of waiting for the first RS #3 is prolonged to the time of waiting for the second RS #3, or to twice the time of waiting for the first RS #3. |
| RS #2 and RS #3 are different | RS #1 and RS #2 overlap | Same as case 5-2-1. |
| | RS #1 and RS #3 overlap | Same as case 5-1. |

Case 6-3: Both DL TCI state #1 and UL TCI state #2 are unknown.

Case 6-3-1: The terminal maintains the PL-RS associated with UL TCI state #2, and RS #1 and RS #2 overlap.

Because RS #1 and RS #2 overlap, the time-frequency synchronization and AGC adjustment time and L1 measurement time of DL TCI state #1 and the L1 measurement time corresponding to UL TCI state #2 need to be relaxed and adjusted specifically as follows:
The time-frequency synchronization and AGC adjustment time of DL TCI state #1 does not need to be relaxed, the L1 measurement time of DL TCI state #1 is relaxed based on sharing factor #1, and the L1 measurement time of UL TCI state #2 is relaxed based on sharing factor #2. In addition, optionally, the switching delay of UL TCI state #2 further needs to be prolonged by the time of waiting for the first RS #2 or by a period of one RS #2.

The terminal does not maintain the PL-RS associated with UL TCI state #2.

A switching delay requirement of DL TCI state #1 considers at least relaxation of the time-frequency synchronization and AGC adjustment time and the L1 measurement time; and a switching delay requirement of UL TCI state #2 considers at least relaxation of the path loss estimation time and the L1 measurement time. Specific cases are shown in the following Table 8.

**Table 8**

| | | |
|---|---|---|
| RS #2 and RS #3 are the same | RS #1 and RS #2 overlap | Case 6-3-2: The time-frequency synchronization and AGC adjustment time corresponding to DL TCI state #1 needs to be prolonged to M times the time of waiting for the first RS (M is optionally 1 or 2); and the L1 measurement time corresponding to DL TCI state #1 is relaxed based on sharing factor #1, and the path loss estimation time and L1 measurement time corresponding to UL TCI state #2 should be prolonged based on sharing factor #2. |
| RS #2 and RS #3 are different | RS #1 and RS #2 overlap | Same as case 6-3-1. |
| | RS #1 and RS #3 overlap | Case 6-3-3: The time-frequency synchronization and AGC adjustment time corresponding to DL TCI state #1 needs to be prolonged to M times the time of waiting for the first RS (M is optionally 1 or 2); and the L1 measurement time corresponding to DL TCI state #1 is relaxed based on sharing factor #1, and the path loss estimation time corresponding to UL TCI state #2 should be prolonged based on sharing factor #2. |

The present invention provides a beam switching delay determining method, so that when a network indicates data scheduling and transmission on a plurality of beams associated with different cells, the terminal can clearly determine an effective time of a corresponding beam and correctly apply the beam, thereby ensuring reliability of transmission. The beam switching delay determining method provided in this application is preferably applied to a high-speed moving scenario.

The beam switching delay determining method provided in this embodiment of this application may be performed by a beam switching delay determining apparatus. A beam switching delay determining apparatus provided in an embodiment of this application is described by assuming that the beam switching delay determining method in this embodiment of this application is performed by the beam switching delay determining apparatus.

As shown in FIG. 4, an embodiment of this application provides a beam switching delay determining apparatus, including:
a receiving module 401, configured to receive indication information, where the indication information is used to indicate target beams, the target beams include a first beam and a second beam, and the first beam and the second beam are associated with two different cells; and
a determining module 402, configured to determine a switching delay of the target beam according to a first preset rule in a case that the indication information is received.

Optionally, the first preset rule includes at least one of the following:
prolonging a layer L1 measurement time;
prolonging a time-frequency synchronization and AGC adjustment time; and
prolonging a path loss estimation time.

Optionally, the prolonging an L1 measurement time includes:
prolonging, based on a first preset value, an L1 measurement time corresponding to the first beam; and
prolonging, based on a second preset value, an L1 measurement time corresponding to the second beam; and
the prolonging a path loss estimation time includes:
   prolonging, based on a third preset value, a path loss estimation time corresponding to the first beam; and
   prolonging, based on a fourth preset value, a path loss estimation time corresponding to the second beam.

Optionally, the first preset value is determined based on at least one of the following:
a period of a first reference signal RS;
a priority of the first RS; and
a priority of a cell associated with the first RS;
   or
the second preset value is determined based on at least one of the following:
   a period of a first RS;
   a priority of the first RS; and
   a priority of a cell associated with the first RS;
      or
   the third preset value is determined based on at least one of the following:
      a period of a first RS;
      a priority of the first RS; and
      a priority of a cell associated with the first RS;
         or
      the fourth preset value is determined based on at least one of the following:
         a period of a first RS;
         a priority of the first RS; and
         a priority of a cell associated with the first RS.

Optionally, in a case that at least two of an RS associated with the first beam, an RS associated with the second beam, and a second RS overlap in time domain, the first RS includes at least one of the RS associated with the first beam, the RS associated with the second beam, and the second RS among the RSs that overlap in time domain.

Optionally, the prolonging a time-frequency synchronization and AGC adjustment time includes prolonging an arrival time of a first RS received after the indication information is received, where the prolonging an arrival time of a first RS is prolonging the arrival time of the first RS by U times.

Optionally, in a case that at least two of an RS associated with the first beam, an RS associated with the second beam, and a second RS overlap in time domain, a value of K is a quantity of the RSs overlapping in time domain, and U is a positive integer less than or equal to K.

Optionally, the first beam and the second beam meet at least one of the following:
the first beam or the second beam is associated with a current serving cell of the terminal;
an RS associated with the first beam and an RS associated with the second beam overlap in time domain;
the RS associated with the first beam and a second RS overlap in time domain; and
the RS associated with the second beam and the second RS overlap in time domain.

Optionally, a cell associated with the second RS includes one of the following:
the current serving cell of the terminal;
a cell associated with one of the target beams; and
other cells, where the other cells are cells other than the current serving cell and a cell associated with each of the target beams.

Optionally, the second RS is a beam failure detection reference signal BFD-RS, a candidate beam detection reference signal CBD-RS, a radio link monitoring reference signal RLM-RS, or an RS used for L1 measurement.

Optionally, the RS associated with the first beam includes at least one of the following:
a direct or indirect quasi co-location QCL source RS of the first beam; and
a path loss reference signal PL-RS associated with the first beam; or
the RS associated with the second beam includes at least one of the following:
   a direct or indirect QCL source RS of the second beam; and
   a PL-RS associated with the second beam.

Optionally, the indication information is carried in one or more pieces of beam switching signaling.

Optionally, the indication information includes at least one of the following:
a spatial relation identifier; and
a transmission configuration indicator TCI state identifier.

Optionally, the switching delay of the target beam includes at least one of the following:
a receiving and processing delay of the indication information;
a hybrid automatic repeat request HARQ delay;
an L1 measurement time;
a time-frequency synchronization and AGC adjustment time; and
a path loss estimation time.

Optionally, the determining module 402 is configured to determine the switching delay of the target beam based on a first switching delay according to the first preset rule in the case that the indication information is received.

Optionally, the first switching delay is determined based on a protocol agreement.

The beam switching delay determining apparatus in this embodiment of this application may be an electronic device, for example, an electronic device with an operating system, or may be a component in an electronic device, for example, an integrated circuit or a chip. The electronic device may be a terminal, or may be other devices than a terminal. For example, the terminal may include but is not limited to the foregoing illustrated type of the terminal 11. The other devices may be a server, a network attached storage (Network Attached Storage, NAS), and the like. This is not specifically limited in this embodiment of this application.

The beam switching delay determining apparatus provided in this embodiment of this application can implement each process of the method embodiment in FIG. 2, with the same technical effect achieved. To avoid repetition, details are not described herein again.

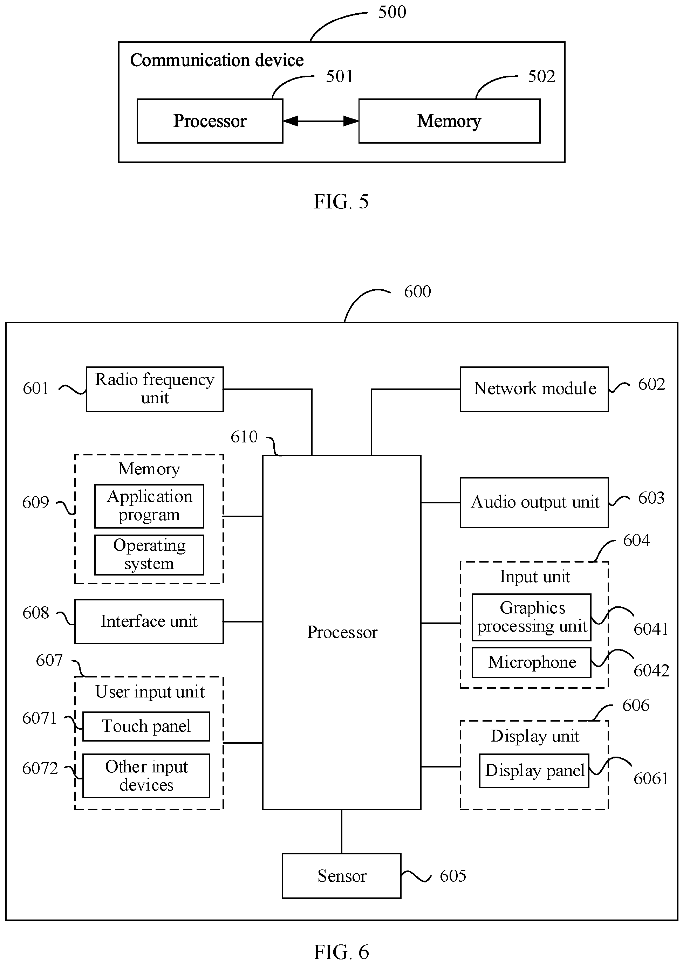

Optionally, as shown in FIG. 5, an embodiment of this application further provides a communication device 500, including a processor 501 and a memory 502. The memory 502 stores a program or instructions capable of running on the processor 501. For example, when the communication device 500 is a terminal, and the program or instructions are executed by the processor 501, each step of the foregoing embodiment of the beam switching delay determining method is implemented, with the same technical effect achieved.

An embodiment of this application further provides a terminal. The terminal includes a processor and a communication interface. The processor is configured to determine a switching delay of a target beam according to a first preset rule in a case that indication information is received. The communication interface is configured to receive the indication information, where the indication information is used to indicate target beams, the target beams include a first beam and a second beam, and the first beam and the second beam are associated with two different cells. The terminal embodiment corresponds to the foregoing terminal-side method embodiment, and each implementation process and implementation of the foregoing method embodiment can be applied to the terminal embodiment, with the same technical effect achieved. Specifically, FIG. 6 is a schematic diagram of a hardware structure of a terminal for implementing an embodiment of this application.

The terminal 600 includes but is not limited to at least some components such as a radio frequency unit 601, a network module 602, an audio output unit 603, an input unit 604, a sensor 605, a display unit 606, a user input unit 607, an interface unit 608, a memory 609, and a processor 610.

A person skilled in the art may understand that the terminal 600 may further include a power supply (for example, a battery) supplying power to all components. The power supply may be logically connected to the processor 610 through a power management system. In this way, functions such as charge management, discharge management, and power consumption management are implemented by using the power management system. The terminal structure shown in FIG. 6 does not constitute a limitation on the terminal. The terminal may include more or fewer components than those shown in the figure, or some components are combined, or component arrangements are different. Details are not described herein again.

It should be understood that, in this embodiment of this application, the input unit 604 may include a graphics processing unit (Graphics Processing Unit, GPU) 6041 and a microphone 6042. The graphics processing unit 6041 processes image data of a still picture or video obtained by an image capture apparatus (such as a camera) in a video capture mode or an image capture mode. The display unit 606 may include a display panel 6061, and the display panel 6061 may be configured in a form of a liquid crystal display, an organic light-emitting diode, or the like. The user input unit 607 includes at least one of a touch panel 6071 and other input devices 6072. The touch panel 6071 is also referred to as a touchscreen. The touch panel 6071 may include two parts: a touch detection apparatus and a touch controller. The other input devices 6072 may include but are not limited to a physical keyboard, a function button (such as a volume control button or a power button), a trackball, a mouse, and a joystick. Details are not described herein again.

In this embodiment of this application, after receiving downlink data from a network-side device, the radio frequency unit 601 may transmit the downlink data to the processor 610 for processing. In addition, the radio frequency unit 601 may send uplink data to the network-side device. Usually, the radio frequency unit 601 includes but is not limited to an antenna, an amplifier, a transceiver, a coupler, a low noise amplifier, a duplexer, and the like.

The memory 609 may be configured to store software programs or instructions and various data. The memory 609 may primarily include a first storage area for storing programs or instructions and a second storage area for storing data. The first storage area may store an operating system, an application program or instructions required by at least one function (such as an audio play function and an image play function), and the like. In addition, the memory 609 may include a volatile memory or a non-volatile memory, or the memory 609 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data rate SDRAM, DDR SDRAM), an enhanced synchronous dynamic random access memory (Enhanced SDRAM, ESDRAM), a synchlink dynamic random access memory (Synch Link DRAM, SLDRAM), and a direct rambus random access memory (Direct Rambus RAM, DRRAM). The memory 609 in this embodiment of this application includes but is not limited to these and any other suitable types of memories.

The processor 610 may include one or more processing units. Optionally, the processor 610 integrates an application processor and a modem processor. The application processor mainly processes operations related to the operating system, a user interface, an application program, and the like. The modem processor mainly processes a wireless communication signal. For example, the modem processor is a baseband processor. It may be understood that the modem processor may alternatively be not integrated in the processor 610.

The radio frequency unit 601 is configured to receive indication information, where the indication information is used to indicate target beams, the target beams include a first beam and a second beam, and the first beam and the second beam are associated with two different cells.

The processor 610 is configured to determine a switching delay of the target beam according to a first preset rule in a case that the indication information is received.

Optionally, the first preset rule includes at least one of the following:
prolonging a layer L1 measurement time;
prolonging a time-frequency synchronization and AGC adjustment time; and
prolonging a path loss estimation time.

Optionally, the prolonging an L1 measurement time includes:
prolonging, based on a first preset value, an L1 measurement time corresponding to the first beam; and
prolonging, based on a second preset value, an L1 measurement time corresponding to the second beam; and
the prolonging a path loss estimation time includes:
   prolonging, based on a third preset value, a path loss estimation time corresponding to the first beam; and
   prolonging, based on a fourth preset value, a path loss estimation time corresponding to the second beam.

Optionally, the first preset value is determined based on at least one of the following:
a period of a first reference signal RS;
a priority of the first RS; and
a priority of a cell associated with the first RS;
   or
the second preset value is determined based on at least one of the following:
   a period of a first RS;
   a priority of the first RS; and
   a priority of a cell associated with the first RS;
      or
   the third preset value is determined based on at least one of the following:
      a period of a first RS;
      a priority of the first RS; and
      a priority of a cell associated with the first RS;
         or
      the fourth preset value is determined based on at least one of the following:
         a period of a first RS;
         a priority of the first RS; and
         a priority of a cell associated with the first RS.

Optionally, in a case that at least two of an RS associated with the first beam, an RS associated with the second beam, and a second RS overlap in time domain, the first RS includes at least one of the RS associated with the first beam, the RS associated with the second beam, and the second RS among the RSs that overlap in time domain.

Optionally, the prolonging a time-frequency synchronization and AGC adjustment time includes prolonging an arrival time of a first RS received after the indication information is received, where the prolonging an arrival time of a first RS is prolonging the arrival time of the first RS by U times.

Optionally, in a case that at least two of an RS associated with the first beam, an RS associated with the second beam, and a second RS overlap in time domain, a value of K is a quantity of the RSs overlapping in time domain, and U is a positive integer less than or equal to K.

Optionally, the first beam and the second beam meet at least one of the following:
the first beam or the second beam is associated with a current serving cell of the terminal;
an RS associated with the first beam and an RS associated with the second beam overlap in time domain;
the RS associated with the first beam and a second RS overlap in time domain; and
the RS associated with the second beam and the second RS overlap in time domain.

Optionally, a cell associated with the second RS includes one of the following:
the current serving cell of the terminal;
a cell associated with one of the target beams; and
other cells, where the other cells are cells other than the current serving cell and a cell associated with each of the target beams.

Optionally, the second RS is:
a beam failure detection reference signal BFD-RS, a candidate beam detection reference signal CBD-RS, a radio link monitoring reference signal RLM-RS, or an RS used for L1 measurement.

Optionally, the RS associated with the first beam includes at least one of the following:
a direct or indirect quasi co-location QCL source RS of the first beam; and
a path loss reference signal PL-RS associated with the first beam; or
the RS associated with the second beam includes at least one of the following:
   a direct or indirect QCL source RS of the second beam; and
   a PL-RS associated with the second beam.

Optionally, the indication information is carried in one or more pieces of beam switching signaling.

Optionally, the indication information includes at least one of the following:
a spatial relation identifier; and
a transmission configuration indicator TCI state identifier.

Optionally, the switching delay of the target beam includes at least one of the following:
a receiving and processing delay of the indication information;
a hybrid automatic repeat request HARQ delay;
an L1 measurement time;
a time-frequency synchronization and AGC adjustment time; and
a path loss estimation time.

Optionally, the processor 610 is configured to determine the switching delay of the target beam based on a first switching delay according to the first preset rule in the case that the indication information is received.

Optionally, the first switching delay is determined based on a protocol agreement.

The terminal provided in this embodiment of this application can implement each process implemented by the method embodiment in FIG. 2, with the same technical effect achieved. To avoid repetition, details are not described herein again.

An embodiment of this application further provides a readable storage medium. The readable storage medium stores a program or instructions. When the program or instructions are executed by a processor, each process of the foregoing embodiment of the beam switching delay determining method is implemented, with the same technical effect achieved. To avoid repetition, details are not described herein again.

The processor is a processor in the terminal in the foregoing embodiment. The readable storage medium includes a computer-readable storage medium, such as a computer read-only memory ROM, a random access memory RAM, a magnetic disk, or an optical disc.

In addition, an embodiment of this application provides a chip, where the chip includes a processor and a communication interface, the communication interface is coupled to the processor, and the processor is configured to run a program or instructions to implement each process of the foregoing embodiment of the beam switching delay determining method, with the same technical effect achieved. To avoid repetition, details are not described herein again.

It should be understood that the chip provided in this embodiment of this application may also be referred to as a system-level chip, a system chip, a chip system, a system-on-chip, or the like.

In addition, an embodiment of this application provides a computer program product. The computer program product is stored in a storage medium. The computer program product is executed by at least one processor to implement each process of the foregoing embodiment of the beam switching delay determining method, with the same technical effect achieved. To avoid repetition, details are not described herein again.

An embodiment of this application further provides a communication system, including a terminal and a network-side device. The terminal may be configured to perform the steps of the foregoing beam switching delay determining method.

It should be noted that in this specification, the term "comprise", "include", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a ..." does not preclude existence of other identical elements in the process, method, article, or apparatus that includes the element. In addition, it should be noted that the scope of the method and apparatus in the implementations of this application is not limited to performing the functions in an order shown or discussed, and may further include performing the functions in a substantially simultaneous manner or in a reverse order depending on the functions used. For example, the method described may be performed in an order different from that described, and various steps may be added, omitted, or combined. In addition, features described with reference to some examples may be combined in other examples.

According to the foregoing description of the implementations, a person skilled in the art may clearly understand that the methods in the foregoing embodiments may be implemented by using software in combination with a necessary general hardware platform, and certainly may alternatively be implemented by using hardware. However, in most cases, the former is a preferred implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. Inspired by this application, a person of ordinary skill in the art may develop many other manners without departing from principles of this application and the protection scope of the claims, and all such manners fall within the protection scope of this application.

## Claims

1. A beam switching delay determining method, comprising:
receiving, by a terminal, indication information, wherein the indication information is used to indicate target beams, the target beams comprise a first beam and a second beam, and the first beam and the second beam are associated with two different cells; and
determining, by the terminal, a switching delay of the target beam according to a first preset rule in a case that the indication information is received.

2. The method according to claim 1, wherein the first preset rule comprises at least one of the following:
prolonging a layer L1 measurement time;
prolonging a time-frequency synchronization and automatic gain control AGC adjustment time; and
prolonging a path loss estimation time.

3. The method according to claim 2, wherein the prolonging an L1 measurement time comprises:
prolonging, based on a first preset value, an L1 measurement time corresponding to the first beam; and
prolonging, based on a second preset value, an L1 measurement time corresponding to the second beam; and
the prolonging a path loss estimation time comprises:
prolonging, based on a third preset value, a path loss estimation time corresponding to the first beam; and
prolonging, based on a fourth preset value, a path loss estimation time corresponding to the second beam.

4. The method according to claim 3, wherein the first preset value is determined based on at least one of the following:
a period of a first reference signal RS;
a priority of the first RS; and
a priority of a cell associated with the first RS;
or
the second preset value is determined based on at least one of the following:
a period of a first RS;
a priority of the first RS; and
a priority of a cell associated with the first RS;
or
the third preset value is determined based on at least one of the following:
a period of a first RS;
a priority of the first RS; and
a priority of a cell associated with the first RS;
or
the fourth preset value is determined based on at least one of the following:
a period of a first RS;
a priority of the first RS; and
a priority of a cell associated with the first RS.

5. The method according to claim 4, wherein in a case that at least two of an RS associated with the first beam, an RS associated with the second beam, and a second RS overlap in time domain, the first RS comprises at least one of the RS associated with the first beam, the RS associated with the second beam, and the second RS among the RSs that overlap in time domain.

6. The method according to claim 2, wherein the prolonging a time-frequency synchronization and AGC adjustment time comprises prolonging an arrival time of a first RS received after the indication information is received, wherein the prolonging an arrival time of a first RS is prolonging the arrival time of the first RS by U times.

7. The method according to claim 6, wherein in a case that at least two of an RS associated with the first beam, an RS associated with the second beam, and a second RS overlap in time domain, a value of K is a quantity of the RSs overlapping in time domain, and U is a positive integer less than or equal to K.

8. The method according to claim 1, wherein the first beam and the second beam meet at least one of the following:
the first beam or the second beam is associated with a current serving cell of the terminal;
an RS associated with the first beam and an RS associated with the second beam overlap in time domain;
the RS associated with the first beam and a second RS overlap in time domain; and
the RS associated with the second beam and the second RS overlap in time domain.

9. The method according to claim 5, 7, or 8, wherein a cell associated with the second RS comprises one of the following:
the current serving cell of the terminal;
a cell associated with one of the target beams; and
other cells, wherein the other cells are cells other than the current serving cell and a cell associated with each of the target beams.

10. The method according to claim 5, 7, or 8, wherein the second RS is:
a beam failure detection reference signal BFD-RS, a candidate beam detection reference signal CBD-RS, a radio link monitoring reference signal RLM-RS, or an RS used for L1 measurement.

11. The method according to claim 5, 7, or 8, wherein the RS associated with the first beam comprises at least one of the following:
a direct or indirect quasi co-location QCL source RS of the first beam; and
a path loss reference signal PL-RS associated with the first beam; or
the RS associated with the second beam comprises at least one of the following:
a direct or indirect QCL source RS of the second beam; and
a PL-RS associated with the second beam.

12. The method according to claim 1, wherein the indication information is carried in one or more pieces of beam switching signaling.

13. The method according to claim 1, wherein the indication information comprises at least one of the following:
a spatial relation identifier; and
a transmission configuration indicator TCI state identifier.

14. The method according to claim 1, wherein the switching delay of the target beam comprises at least one of the following:
a receiving and processing delay of the indication information;
a hybrid automatic repeat request HARQ delay;
an L1 measurement time;
a time-frequency synchronization and AGC adjustment time; and
a path loss estimation time.

15. The method according to claim 1 or 2, wherein the determining, by the terminal, a switching delay of the target beam according to a first preset rule in a case that the indication information is received comprises:
determining, by the terminal, the switching delay of the target beam based on a first switching delay according to the first preset rule in the case that the indication information is received.

16. The method according to claim 15, wherein the first switching delay is determined based on a protocol agreement.

17. A beam switching delay determining apparatus, comprising:
a receiving module, configured to receive indication information, wherein the indication information is used to indicate target beams, the target beams comprise a first beam and a second beam, and the first beam and the second beam are associated with two different cells; and
a determining module, configured to determine a switching delay of the target beam according to a first preset rule in a case that the indication information is received.

18. The apparatus according to claim 17, wherein the first preset rule comprises at least one of the following:
prolonging a layer L1 measurement time;
prolonging a time-frequency synchronization and AGC adjustment time; and
prolonging a path loss estimation time.

19. A terminal, comprising a processor and a memory, wherein the memory stores a program or instructions capable of running on the processor, and when the program or instructions are executed by the processor, the steps of the beam switching delay determining method according to any one of claims 1 to 16 are implemented.

20. A readable storage medium, wherein the readable storage medium stores a program or instructions, and when the program or instructions are executed by a processor, the steps of the beam switching delay determining method according to any one of claims 1 to 16 are implemented.
